(19) Europäisches Patentamt
European Patent Office
Office européen des brevets

(11) EP 0 966 769 B1

(12) # FASCICULE DE BREVET EUROPEEN

(45) Date de publication et mention de la délivrance du brevet:
**17.03.2004 Bulletin 2004/12**

(21) Numéro de dépôt: **98958756.3**

(22) Date de dépôt: **02.12.1998**

(51) Int Cl.[7]: **H01M 4/60**

(86) Numéro de dépôt international:
**PCT/CA1998/001125**

(87) Numéro de publication internationale:
**WO 1999/028984 (10.06.1999 Gazette 1999/23)**

(54) **NOUVEAUX MATERIAUX D'ELECTRODES DERIVES DE COMPOSES IONIQUES POLYQUINONIQUES ET LEURS UTILISATIONS DANS LES GENERATEURS ELECTROCHIMIQUES**

NEUE ELEKTRODENMATERIALEN AUS IONISCHEN POLYCHINOID-DERIVATEN UND DEREN VERWENDUNGEN IN ELEKTROCHEMISCHEN GENERATOREN

NOVEL ELECTRODE MATERIALS DERIVED FROM POLYQUINOID IONIC COMPOUNDS AND THEIR USES IN ELECTROCHEMICAL GENERATORS

(84) Etats contractants désignés:
**DE FR GB IT**

(30) Priorité: **02.12.1997 CA 2223562**

(43) Date de publication de la demande:
**29.12.1999 Bulletin 1999/52**

(73) Titulaires:
- **ACEP INC.**
  **Montreal, Quebec H2Z 1A4 (CA)**
- **CENTRE NATIONAL DE LA RECHERCHE SCIENTIFIQUE**
  **75016 Paris Cédex (FR)**
- **Universite de Montreal**
  **Montréal, Québec H3C 3J7 (CA)**

(72) Inventeurs:
- **ARMAND, Michel**
  **Montréal, Québec H3T 1N2 (CA)**
- **MICHOT, Christophe**
  **F-38000 Grenoble (FR)**
- **RAVET, Nathalie**
  **Montréal, Québec H3T 1T9 (CA)**

(74) Mandataire: **Guerre, Dominique et al**
**Cabinet Germain et Maureau,**
**12, rue Boileau,**
**BP 6153**
**69466 Lyon Cedex 06 (FR)**

(56) Documents cités:

| | |
|---|---|
| CH-A- 657 862 | FR-A- 2 465 325 |
| GB-A- 1 115 335 | US-A- 5 637 452 |

- **"The Merck Index" 1996 , MERCK RESEARCH LABS , WHITEHOUSE STATION ,NJ, USA XP002099238 voir composé 8447 voir page 1426**
- **"The merck index" 1996 , MERK RESEARCH LABS , WHITEHOUSE STATION, NJ, USA XP002099239 voir composé 5743 voir page 973**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 966 769 B1

## Description

### DOMAINE DE L'INVENTION

La présente invention concerne de nouveaux dérivés de composés ioniques polyquinoniques utiles comme matériaux d'électrodes utilisés par exemple dans les générateurs électrochimiques.

### ART ANTÉRIEUR

On connaît les matériaux d'électrodes dérivés des métaux de transition, en particulier les chalcogénures binaires des métaux de transition, tels que $TiS_2$, $VO_x$, (2≤ x 2,5), les oxydes ternaires tels que $LiNiO_2$ $LiCoO_2$, $Li_{1+x}Mn_{2-x}O_4$(O≤ x ≤1), et $LiV_3O_8$. Ces matériaux présentent très souvent une toxicité appréciable propre aux métaux de transition. À l'exception des dérivés du vanadium, les capacités sont en pratique modestes, i.e., de l'ordre de 100 $Ah.g^{-1}$, et leurs potentiels de fonctionnement (environ 4 V vs Li+/ Li°) sont au delà du domaine de stabilité des électrolytes solides ou liquides. Ils posent donc des problèmes sérieux de sécurité.

Les composés organiques de type polymère conjugué fonctionnent par un mécanisme d'insertion d'anions puisés dans l'électrolyte. Les capacités massiques résultantes sont conséquemment faibles et les possibilités de cyclage décevantes.

On connaît par ailleurs les composés de type polydisulfure, qui, bien que n'ayant pas de conductivité électronique intrinsèque, présentent des propriétés rédox et des capacités massiques intéressantes (≤300 $Ah.g^{-1}$), en particulier les dérivés de couplage oxydant du 2,5-dimercaptothiadiazole. Cependant, les produits de réduction ultimes et les intermédiaires sont des sels de lithium de type thiolate conjugué avec un atome d'azote. La délocalisation de la charge sur des centres anioniques polarisables tels le soufre et l'azote, amènent une solubilité relativement importante dans les électrolytes, s'accompagnant d'une durée de vie en cyclage réduite.

Les monoquinones sont des composés organiques connus pour leurs propriétés rédox, mais les potentiels sont relativement peu intéressants (de l'ordre de 2,2 V vs LI'Li') et les composés sous forme oxydée neutre sont solubles dans les électrolytes. Les polymères portant des fonctions quinoniques tels ceux résultant de la polycondensation de l'hydroquinone et du formaldéhyde ne sont pas actifs électrochimiquement du fait d'une mobilité réduite des porteurs de charge, ions et électrons, en l'absence de solvants protiques très polaires comme l'eau.

Conformément au document EP-A 0911894 est divulguée une batterie secondaire avec une électrolyte, une électrode négative et une électrode positive, cette batterie comprenant, en tant que composé rédox, un polymère de quinones.

Le document GB-A- 1 115 335 décrit le rhodizonate de potassium, en tant que composé rédox.

Le document US-A- 5 637 452 décrit l'acide élagique avec un cation métallique.

Les documents US-A 4 191 778 et WO - A - 94 14203 décrivent divers sels de dérivé d'acide quinonylique.

### SOMMAIRE DE L'INVENTION

La présente invention concerne des composés électroactifs dérivés de sels d'anions possédant au moins 2 fonctions quinones cumulées ou conjuguées ou les deux, dans la même molécule. Plus spécifiquement, l'invention concerne une électrode contenant, en totalité ou en partie, un composé rédox choisi dans ceux définis dans la revendication 1.

Sont exclus des composés selon la présente invention, le rhodizonate de potassium, tout propylgallate, et tout tannin.

Il est à noter que pour les besoins de la présente demande, lorsque n introduit dans la définition de la revendication 1 en annexe est plus petit ou égal à 4, cela signifie que le composé de l'invention n'est pas considéré comme un polymère. En outre, l'expression « radical divalent» se définit comme un alkylène, un arylène ou un arylalkylène de 2 à 200 atomes de carbone, et comprenant optionnellement un ou plusieurs substituant aza, oxa ou thia.

La présente demande concerne de un système de stockage de l'énergie électrique de type générateur primaire ou secondaire ou super-capacité comprenant un électrolyte, au moins une électrode négative et au moins une électrode positive comprenant un composé de l'invention.

### DESCRIPTION DÉTAILLÉE DE L'INVENTION

Dans la présente invention, une nouvelle famille de composés électroactifs dérivés de sels d'anions possédant plusieurs fonctions quinones cumulées et/ou conjuguées dans la même molécule est décrite et revendiquée. Il a été observé que ce type de composés possédait une capacité élevée, i.e., égale ou supérieure à 300 $Ah.g^{-1}$, obtenue à des potentiels compris entre 3.5 et 1 V vs. $Li^-/Li°$, donc dans le domaine de stabilité des électrolytes aprotiques usuels,

liquides ou solides, et permettant la constitution d'électrodes positive et négative de générateurs. En outre, les sels correspondants ne possèdent pas, quel que soit leur degré d'oxydation, de solubilité appréciable dans les électrolytes liquides ou polymères aprotiques. La cinétique de la réaction rédox en phase solide est appréciable et comparable à celle des matériaux d'insertion inorganiques. Il a par ailleurs été observé que le remplacement de l'atome d'oxygène des groupements quinoniques CO neutres par des groupements NCN ou $C(CN)_2$, et/ou le remplacement de l'oxygène des groupements quinoniques chargés négativement $CO^-$ par des groupements anioniques $N^-$, $NCN^-$ ou $C(CN)_2^-$ bénéficiaient des mêmes propriétés intéressantes en terme d'activité rédox. Le potentiel rédox est déplacé d'environ 300 mV vers les valeurs positives par le remplacement d'un oxygène quinonique neutre par les groupements NCN ou $C(CN)_2$. Les méthodes chimiques pour réaliser ces substitutions sur les groupements quinoniques sont bien connues de la personne de l'art.

Les composés rédox de la présente invention incluent aussi les polyquinones dont l'oxygène des groupements quinoniques chargé négativement est remplacé par le soufre $S^-$. Dans ce cas, la conjugaison de la charge avec un groupement oxygéné CO neutre peu polarisable et plus électronégatif diminue considérablement la solubilité des dérivés ioniques correspondants, en particulier dans les solutions électrolytiques. Un degré d'oxydation supplémentaire est alors obtenu par duplication oxydative des groupements CS pour former des ponts disulfures CS-SC.

Ces composés polyquinoniques aussi peuvent faire partie de polymères dans lesquels les charges sont conjuguées le long de la trame polymérique. Dans ce cas, la solubilité de ces macromolécules rigides est nulle, quelle que soit la charge portée par le polymère, donc y compris dans l'état neutre.

Comme les composés de la présente invention sont des sels d'anions, donc chargé négativement, il est nécessaire de combiner à ceux-ci un cation afin que la charge globale soit neutre. Les cations préférés sont choisis avantageusement parmi le proton; les cations alcalins tels que Li, Na, K, Cs; les cations d'alcalino-terreux tels que Mg, Ca, Ba; les cations de métaux de transition tels que Cu, Zn, Pb, Fe, Ni, Co, Mn, V, Cr; les cations des terres rares; les cations organe-métalliques tel que les métallocénium ; les cations de type « ium » tels que ammonium, amidinium, guanidinium, pyridinium, imidazolium, triazolium, imidazolinium, sulfonium, phosphonium, iodinium ; une unité de répétition d'un polymère conjugué sous forme oxydée cationique telles que le polypyrrole, le polythiophène, les polyquinolines; les cations sous formes monomères ou polymères qui possèdent ou non un caractère rédox, tels que les viologènes de formule $[-(R''NC_5H_4-C_5H_4N-)^{2+}]_n$ dans laquelle R" est $C_{2-12}$ alkylène, $C_{6-14}$ arylène ou $C_{6-14}$ arylène $C_{2-12}$ alkylène, chacun pouvant être optionnellement substitué par oxa, aza ou thia. Le cation lithium et le proton sont tout particulièrement préférés. Il est à noter que d'autres ions peuvent être présents dans le milieu électrolytique et/ou dans le matériau d'électrode et peuvent en particulier contribuer à améliorer la conductivité ou les propriétés interfaciales. L'ion potassium est avantageusement utilisé dans ce cas, ainsi que les cations dérivés des imidazolium quaternisés.

À la capacité rédox des molécules de la présente invention peut s'ajouter celle propre au cation quand celuici possède plusieurs degrés d'oxydation. Sont particulièrement intéressants pour cette application les cations du fer, du cuivre et du manganèse, de même que les métallocènes. Les cations organiques présentant des propriétés rédox, tels que les viologènes, sont similairement utiles. Ces cations peuvent faire partie ou non d'une trame polymérique.

Les composés de la présente invention possèdent des capacités spécifiques d'échange rédox élevées et supérieures à celles des composés inorganiques conventionnels. La très grande variété de groupements fonctionnels disponibles permet de choisir les potentiels rédox dans une large gamme de potentiels, typiquement de 0,1 à 3,7 V vs. $Li^+/Li^\circ$. Les composés dont les couples rédox sont compris entre 0.1 et 2 V vs. $Li^+/Li^\circ$ sont avantageusement utilisés comme composante des électrodes négatives dans les générateurs électrochimiques de type batterie primaire et secondaire ou supercapacité. À l'identique, les composés dont les couples rédox sont compris entre 2 et 3,7 V vs. $Li^+/Li^\circ$ sont avantageusement utilisés comme composant des électrodes positives dans les mêmes dispositifs ou comme électrode active ou passive dans les dispositifs électrochromes.

Les composés de la présente invention peuvent être utilisés seuls ou en mélanges avec d'autres composés de l'invention. Ils peuvent en outre être utilisés en conjonction avec d'autres composés rédox, en particulier les composés d'insertion. De tels composés d'insertion incluent, pour les électrodes négatives, le lithium métallique ou un des ses alliages, optionnellement sous forme de dispersion nanométrique dans de l'oxyde de lithium; les nitrures doubles de lithium et d'un métal de transition tel que le cobalt; les oxydes à bas potentiel de formules générales $Li_{1+y}Ti_{2-x/4}O_4$ où x et y varient entre 0 et 1 ; et le carbone et les produits carbonés issus de la pyrolyse de matières organiques. Pour les électrodes positives, les composés d'insertion incluent les oxydes et sulfures de métaux de transition tels que $VO_z$ où z varie entre 2 et 2.5; $LiV_3O_8$; $Li_aN_{1-a}Co_aO_2$ où a varie entre 0 et 1; les spinelles de manganèse $Li_yMn_{2-x}M_xO_4$ où x varie entre 0 et 0.5 et y varie entre 0 et 2, et M est Li, Cr, Al, V, Ni); les polydisulfures organiques; FeS; $FeS_2$; le sulfate de fer; les phosphates et phosphosilicates de fer et de lithium de structure olivine; ou le produit de substitution du fer par le manganèse, utilisés seuls ou en mélange.

Les électrodes selon l'invention contiennent, en totalité ou en partie, les nouveaux composés rédox, seuls ou en mélanges, et éventuellement au moins un conducteur électronique, et au moins un liant de nature polymérique. Les conducteurs électroniques sont de préférence choisis parmi les composés carbonés tels que le noir de carbone,

la poudre de graphite, les produits de la pyrolyse de matières organiques, en particulier les résines phénoliques ou le polyacrylonitrile. Lorsque le liant de l'électrode n'a pas de fonction électrochimique mais seulement une fonction mécanique, celui-ci est avantageusement choisi parmi les polymères non polaires comme le polytétrafluoroéthylène, les co- ou ter-polymère de l'éthylène, du propylène et d'un diène permettent de lier les matériaux en laissant une porosité permettant la pénétration de l'électrolyte nécessaire au fonctionnement de ces matériaux rédox.

Les électrolytes liquides utilisables avec ce type de matériau rédox sont ceux obtenus par dissolution d'un sel ou d'un acide dans un solvant. Les solvants sont de préférence choisis parmi les carbonates cycliques et acycliques, la γ-butyrolactone, les monoalkylamides et di-alkylamides, les tétraalkylsulfamides, les éthers dialkylés des mono, di, tri et tétraéthylene glycols ainsi que les oligomères de masses inférieures à 2000 g/mole et leurs mélanges.

Dans une variante, le liant des électrodes possède une conductivité ionique et permet d'assurer un contact intime entre les particules des matériaux rédox et l'électrolyte tout en permettant de compenser, par leur caractère plastique ou élastomère, les variations de volume inhérentes au fonctionnement de l'électrode. Dans des réalisations préférées, l'électrolyte contient, individuellement ou mélangés, un polymère de type polaire, un solvant polaire, et au moins un sel ionique. Les polymères de type polaire utilisables avec l'ajout d'un solvant liquide sont de préférence choisis parmi les homo- ou copolymères à base de fluorure de vinylidène, les homo- ou copolymères à base d'acrylonitrile, les homo- ou copolymères à base de méthacrylate de méthyle. Les polymères de type polaire utilisables avec ou sans l'ajout d'un solvant liquide sont de préférence choisis parmi les polyéthers tels que les homo- ou copolymères à base d'oxyde d'éthylène ou d'oxyde de propylène. Dans une variante de la mise en oeuvre préférée des composés de l'invention, les électrolytes polymères sont additionnés de particules céramiques et/ou réticulées, ce qui permet d'en améliorer les propriétés mécaniques.

Un autre aspect intéressant de certains des composés de l'invention est leur possibilité de donner, par oxydation au delà du potentiel de fonctionnement réversible normal, une réaction irréversible libérant des ions lithium et des composés gazeux tels le dioxyde ou le monoxyde de carbone, l'azote, l'éthylène ou l'acétylène ou leurs polymères. Ces produits s'éliminent du milieu du générateur (gaz) ou sont inactifs (polymères), et permettent de disposer d'une capacité excédentaire très utile pour compenser les pertes d'équilibre de capacité entre l'anode et la cathode, dues principalement à la constitution d'une couche de passivation lors des premiers cycles de forictionnement du générateur.

Les anions suivants sont une illustration des composés de la présente invention, et ne devraient pas être considérés comme en limitant la portée.

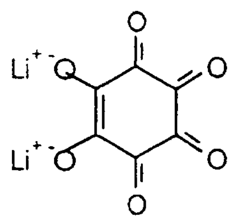

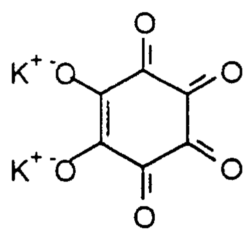

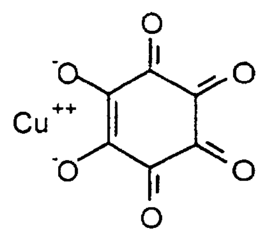

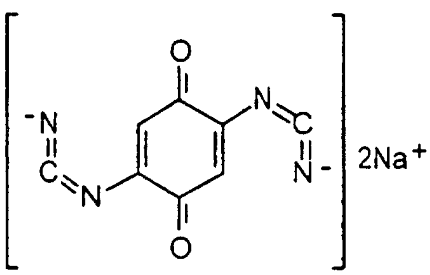

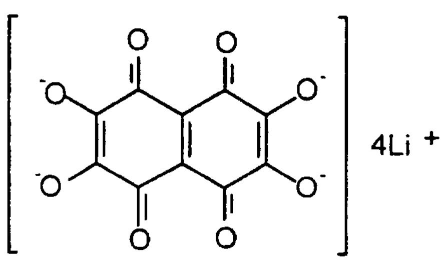

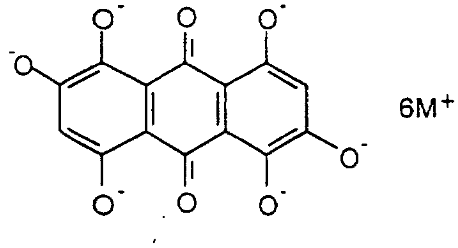

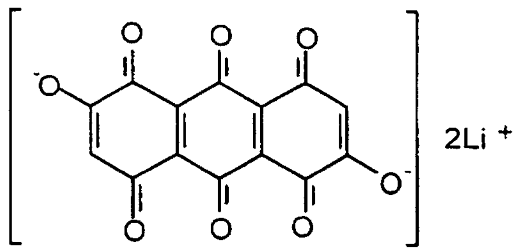

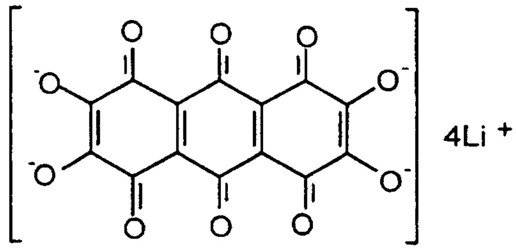

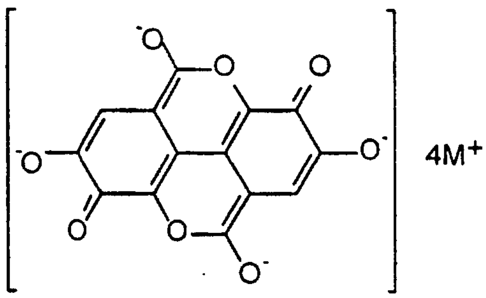

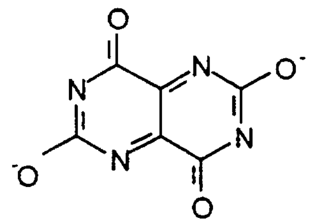

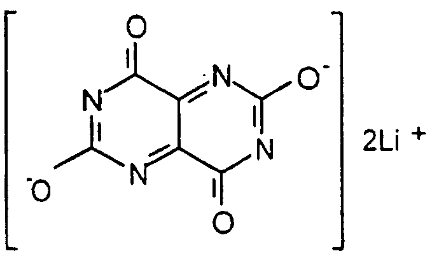

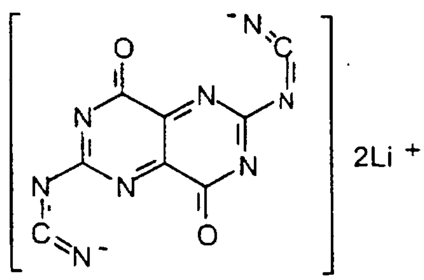

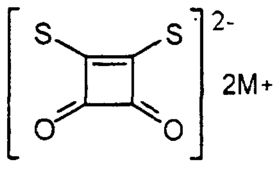

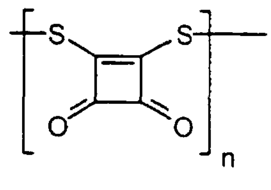

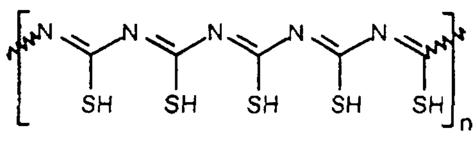

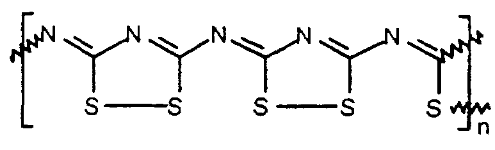

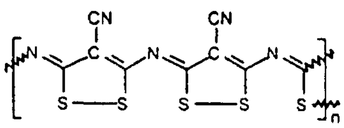

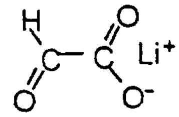

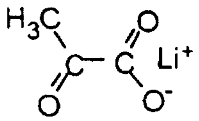

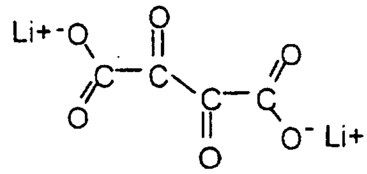

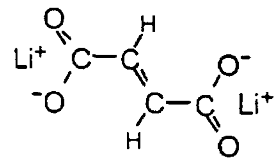

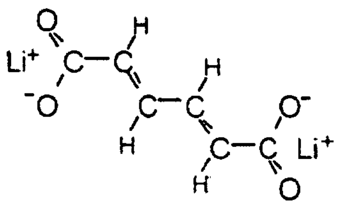

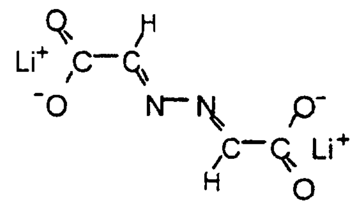

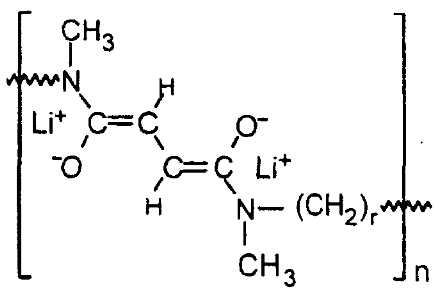

$2 \leq r \leq 12$

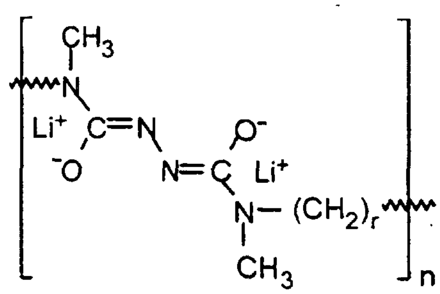

$2 \leq n \leq 10^4$

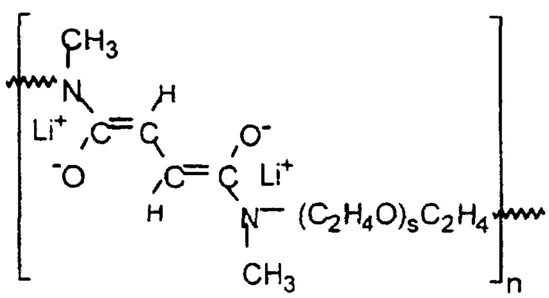

$1 \leq s \leq 100$

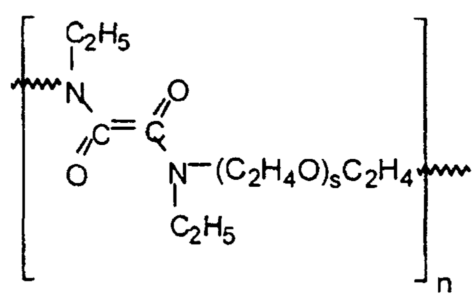

$1 \leq s \leq 100$

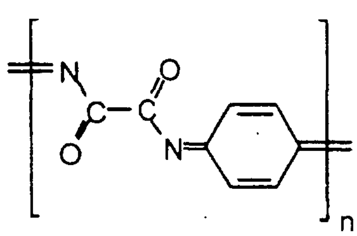

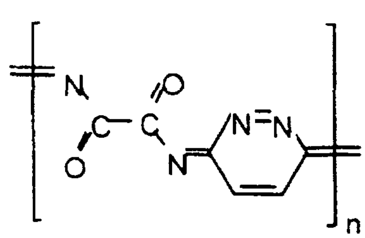

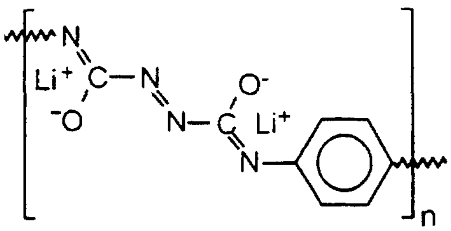

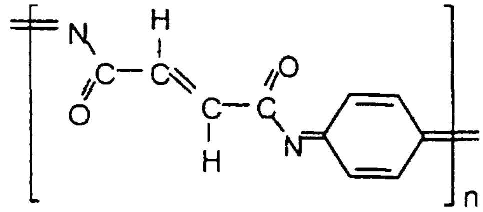

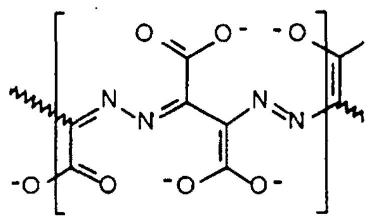

$4 \leq n \leq 10^4$

Les exemples qui suivent illustrent la présente invention selon des modes de réalisation préférentiels, et ne devraient pas être considérés comme en limitant sa portée.

Exemple 1

2,10 g d'acide rhodizonique commercial sous forme dihydratée (Lancaster Windham NH USA) sont traités par 839 mg de monohydrate d'hydroxyde de lithium dans l'isopropanol. La suspension est filtrée et le précipité noir est séché sous vide primaire à 50°C, pour donner le rhodizonate de lithium suivant :

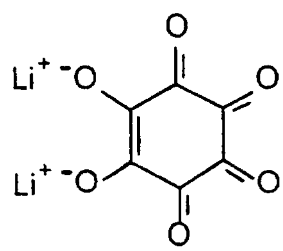

Exemple 2

Une batterie au lithium est constituée par un film de lithium de 30 mm d'épaisseur, d'un électrolyte polymère constitué par un complexe de polyoxyde d'éthylène de masse 9 x $10^4$ et de bis-trifluorométhanesulfonylamidure de lithium (LiTFSI) de manière à ce que le rapport du nombre des oxygènes du polymère sur les ions lithium soit de 12: 1. La solution dans un solvant commun est épandue, évaporée et séchée de manière à former un film d'environ 80 µm d'épaisseur. L'électrode positive est composée d'un mélange 40% v/v du rhodizonate de lithium préparé selon l'exemple 1, de 5% en volume de noir de carbone (Ketjen black® et 5% v/v de l'électrolyte de la composition électrolytique décrite précédemment, mais préparée avec un polymère de masse moléculaire $10^5$. À ce mélange est ajouté de l'acétonitrile, et la suspension obtenue est homogénéisée par agitation avec des billes de zircone dans un récipient d'acier inoxydable pendant 24 h. L'électrode est obtenue par épandage de la suspension sur un disque d'acier inoxydable de 1,6 cm de diamètre de manière à former après évaporation du solvant une couche ayant une épaisseur de 60 mm. La batterie assemblée en atmosphère neutre (hélium < 1ppm $O_2$, $H_2O$) sous forme de pile-bouton par pressage des trois composantes: anode-électrolyte-cathode et est testée à 80°C en voltammétrie lente à l'aide d'un potentiostat digital Macpile® (Claix, France). Deux domaines d'activité correspondant chacun à une capacité de 305 $mAh.g^{-1}$ sont apparents à environ 2,8 V et environ 1,8 V par rapport au couple $Li^+/Li°$. À titre de comparaison, la capacité l'électrode

à base de spinelle de manganèse $LiMn_2O_4$ possède une capacité théorique maximale de 153 $mAh.g^{-1}$ à 2,9 V et les modifications de ce composé, destinées à limiter la dissolution du manganèse telle la composition $Li_{1.05}Mn_{1.85}Al_{0.1}O_4$ ont une capacité de 115 $mAh.g^{-1}$.

Exemple 3

La tétrahydroxybenzoquinone est traitée par un excès d'isoproxyde de lithium en solution dans l'isopropanol pour donner le tétra-sel de lithium correspondant selon la réaction suivante:

$$C_6(O)_2(OH)_4 + 4\ LiOCH(CH_3)_2 \rightarrow C_6(O)_2(OLi)_4 + 4\ HOCH(CH_3)_2$$

Le précipité noir est filtré, séché et conservé à l'abri de l'air.

Une batterie dite de type "rocking chair" ou "lithium ion" est constituée par une électrode négative de graphite (85% v/v) liée par un copolymère de fluorure de vinylidène et d'hexafluoropropène (PVDF), déposés sur un feuillard mince de cuivre de 8 mm et correspondant à une capacité de 3,1 $mAh.cm^{-2}$ pour la composition $LiC_6$. L'électrode positive est un mélange de noir de carbone de type Ketjen black® (7% v/v), du tétra-sel de lithium de la tétrahydroxybenzoquinone (73% v/v) et de PVDF (10%) déposé sur un collecteur d'aluminium de 10 mm. La capacité de l'électrode positive pour un échange réversible de deux électrons par molécule est de 3,5 $mAh.cm^{-2}$. L'électrolyte est constitué d'une solution 1M de $LiPF_6$ dans un mélange de carbonate d'éthylène de 2-tertiobutoxyéthyl-2'-méthoxyéthyléther (50/50 v/v). Le liquide est immobilisé dans une membrane poreuse (Celgard®) de 25 mm d'épaisseur. La batterie est chargée en mode intentiostatique à 0,45 $mAcm^{-2}$ pendant 8 heures et le potentiel se stabilise à 3,6 V. La capacité extraite en décharge à C/5, c'est-à-dire 5 heures pour extraire la capacité nominale, est de 3,8 $mAh/cm^2$, et est stable au cours du cyclage sur plus de 100 cycles. La capacité irréversible de la première insertion du lithium dans le carbone, qui est par ailleurs nécessaire à la formation d'une couche de passivation, est obtenue par suroxydation du sel de lithium selon l'équation:

$$Li_4C_6O_6 \rightarrow 4Li^+ + 4e^- + 6\ CO$$

Le fonctionnement réversible de la batterie se produit selon l'équation:

$$<Li_4C_6O_6> + 2 <C_6> \Leftrightarrow <Li_2C_6O_6> + 2 <LiC_6>$$

Un générateur identique à celui de l'exemple 3 est fabriqué en mélangeant deux composés actifs dans l'électrode positive, soit 0,9 $mg/cm^2$ de tétra-sel de lithium de la tétrahydroxybenzoquinone et 16 $mg/cm^2$ d'oxyde de cobalt et de lithium $LiCoO_2$. Le générateur est chargé à 4,2 V et sa capacité au cyclage est de 2,5 $mAh.cm^{-2}$, ce qui correspond 96% de la capacité de l'oxyde de cobalt seul.

Exemple 4

Le rhodizonate de potassium $K_2C_6O_6$ commercial (Fluka, Buchs, Suisse) est traité pour constituer un générateur électrochimique dans des conditions similaires à celles de l'exemple 2. La capacité est de 210 $mAh.g^{-1}$, soit 93% de la capacité théorique, qui est de 225 $mAh.g^{-1}$.

Exemple 5

Le rhodizonate de cuivre est préparé par action de 3,5 g d'acide rhodizonique dihydraté sur 3,7 g d'acétate de cuivre dihydraté dans le méthanol. Après évaporation du solvant et de l'acide acétique produit par la réaction, le rhodizonate de cuivre est séché à 110°C sous vide primaire. La capacité obtenue dans un générateur à anode de lithium et électrolyte de type gel (45% copolymère de fluorure de vinylidène et d'hexafluoropropène, 55% solution 1 M de $LiBF_4$ dans la $\gamma$-butyrolactone est de 450 $mAh.g^{-1}$ et correspond à 94% de la capacité théorique pour 4 électrons entre 3,3 et 2,5 V vs. $Li^+/Li^\circ$.

Exemple 6

Le composé

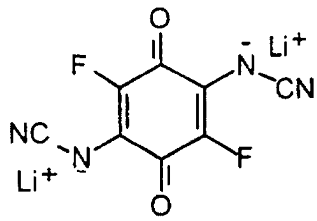

est obtenu par action de deux équivalents du di-sel de lithium de la cyanamide $Li_2NCN$ sur la tétrafluorobenzoquinone dans le DMF. Le fluorure de lithium est séparé par centrifugation et le sel de lithium bleu correspondant à la formule ci-dessus est précipité dans l'éther. Ce composé possède une capacité de 235 $mAh.g^{-1}$ à 2,6 V vs. $Li^+/Li°$.

Exemple 7

L'acide rufigallique est préparé selon la méthode de Robiquet (*Ann.* 19, (1836), 204) par condensation de l'acide gallique dans l'acide sulfurique concentré. Le sel de lithium hexasubstitué est préparé par mise en suspension de l'acide rufigallique dans le THF sous atmosphère neutre et traitement par l'isopropoxyde de lithium. Le sel résultant est filtré et séché sous azote sec. L'oxydation sous forme diquinonique est obtenue par traitement de 4,0 g de ce composé par une quantité stoechiométrique de [bis(trifluoroacétoxy)iodo]benzène (10,18 g) dans l'acétonitrile. Après filtration et séchage, on obtient le composé

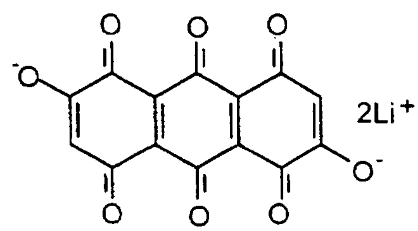

Ce composé possède une capacité réversible de 358 $mAh.cm^{-2}$ entre 2,5 et 3,2 V vs. $Li^+/Li°$.

Exemple 8

1,40 g d'acide trans-trans muconique (Sigma, Saint-Louis, Mo) sont traités par 0,739 g de carbonate de lithium dans le méthanol. Après évaporation et séchage sous vide, un générateur similaire à celui de l'exemple 2 est fabriqué en utilisant un mélange cathodique de 25% v/v de muconate de lithium, 10% de Ketjen black® et de 65% de polyélectrolyte. Le composé a une capacité réversible de 0,8 électron par formule à 1,3 V par rapport au lithium. Ce composé peut être utilisé comme électrode négative dans les batteries de type lithium-ion.

Exemple 9

Un polymère possédant de fonction azino conjuguées (diazo à l'état réduit) est préparé par action de 5 g de monohydrate d'hydrazine $N_2H_4 \bullet H_2O$ sur le sel de sodium de l'acide dihydroxytartrique (22,6 g, Janssen Chemicals, Belgique) dans l'acide acétique glacial, sous agitation pendant 24 h. Le polymère brun foncé est précipité dans l'isopropanol, séparé par filtration et séché. Ce composé possède des propriétés rédox à raison de 2 électrons par unité de répétition du polymère, soit une capacité de 290 $mAh.g^{-1}$. Le sel de lithium obtenu par passage sur une colonne échangeuse d'ions a une capacité de 360 $mAh.g^{-1}$. La formule de polymère réduit à 50% de sa capacité est :

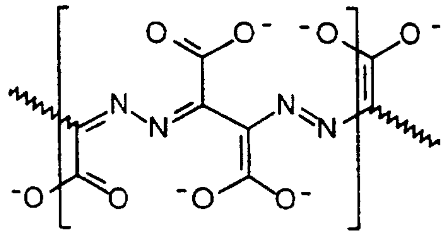

Exemple 10

Le sel de potassium de l'acide dithiosquarique est préparé par action de l'hydrogénosulfure de potassium (14,43 g, Alpha, USA) sur la dibutoxy3,4-cyclobutane1,2-dione (22,62 g Aldrich) dans l'éthanol. Le sel jaune obtenu est recristallisé dans un mélange éthanol-eau, et est de formule

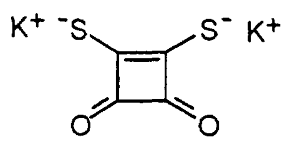

À 18 g de ce sel en suspension dans l'acétonitrile sont ajoutés sous agitation mécanique une solution de tribromure de tétrabutylammonium (34,6 g) dans l'acétonitrile. Après 1 heure, le précipité jaune est filtré et séché pour donner :

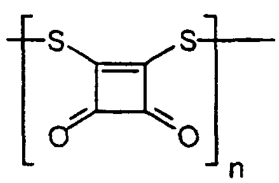

Ce composé possède une capacité réversible de 385 $mAh.g^{-1}$ au potentiel moyen de 2,8 V vs. $Li^+/Li^\circ$et sa solubilité dans les électrolytes comme le carbonate de propylène et ses mélanges ou les polymères solvatant à base de polyoxyde d'éthylène est négligeable, contrairement au polydimercaptothiadiazole.

Exemple 11

Une polybase de Schiff, l'acide poly(thiocyanique), est préparé par action du thiophosgène sur la thiourée dans le carbonate de propylène en présence de pyridine. La suspension brun foncé est versée dans 100 ml d'eau et le précipité est filtré et lavé à l'eau. Le produit correspond à la composition $[C(SH)=N]_n$ dont la formule développée est :

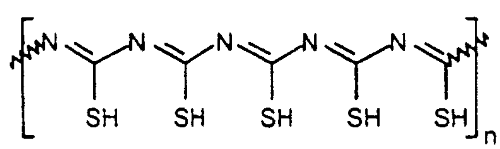

Le polymère sous forme réduite est oxydé par l'iode en solution dans l'acétonitrile en présence de pyridine et la suspension résiduelle est lavée à l'acétonitrile jusqu'à obtention d'un éluat incolore. La poudre marron noir correspond à l'oxydation des groupements thiols pour donner le polymère :

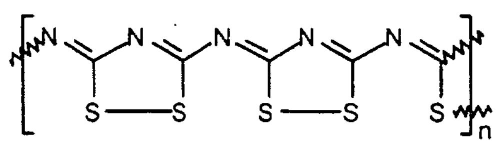

Un générateur électrochimique similaire à celui de l'exemple 2 utilisant une électrode positive contenant 40% v/v du composé ainsi obtenu montre une capacité de 360 $mAh.g^{-1}$ entre 3 et 2,4 V vs. $Li^+/Li°$, soit 75 % de la capacité théorique qui est de 478 $mAh.g^{-1}$.

Exemple 12

Similairement à l'exemple 11, le copolymère alterné de formule :

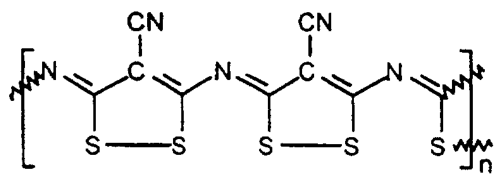

est préparé en remplaçant la thiourée de l'exemple précédent par la thioamide de l'acide cyanoacétique (Lancaster). Le polymère obtenu après oxydation est une poudre noire dont la capacité est de 555 $mAh.g^{-1}$ dont 50% entre 3,2 V et 2,4 V vs. $Li^+/Li°$.

Exemple 13

La tétraaminobenzoquinone est préparée selon la méthode de Wallenfel & al. (*Ann*. (1963), 667). 16,8 g de ce composé est 2,46 g de chloranil (tétrachlorobenzoquinone) sont mélangés dans un broyeur à bille, puis chauffés sous un balayage d'argon 250 °C dans un four Büchi TO51 suivi d'un traitement à 350°C sous vide. Le composé obtenu correspond à la polyquinone-azine de formule:

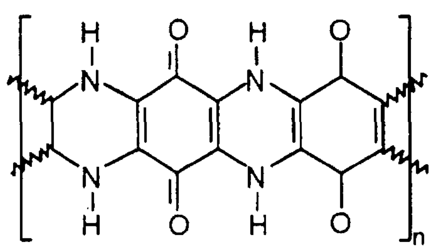

Le sel de lithium de ce composé est obtenu par traitement d'une suspension du polymère par une solution de d'isopropoxyde de lithium dans le l'isopropanol. Ce composé a une capacité réversible de 345 $Ah.g^{-1}$ entre 2,4 et 3 V vs $Li^+/Li°$, soit 75 % de la capacité théorique qui est de 420 $mAh.g^{-1}$. Le sel de lithium de ce polymère peut aussi être obtenu directement par action de la tétrachlorobenzoquinone sur le nitrure de lithium dans les rapports molaires 1:2 par cobroyage dans le DMF anhydre.

Exemple 14

Un polymère parfaitement alterné entre l'éthylène et le monoxyde de carbone est préparé selon la méthode de Hiraguri et al. (J. Am. Chem. Soc. , 109, (1987), 3779). 56.06 g de ce polymère sont dissous dans l'hexafluoropropanol et traités par 10,39 g de nitrite de lithium au reflux du solvant. Le polymère conjugué apparaît sous forme d'un précipité noir qui est le sel de lithium de formule

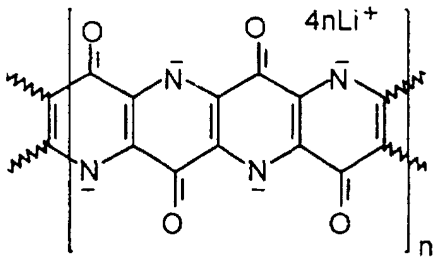

Exemple 15

L'acide azino(bisacétique) est préparée par réaction de l'hydrate d'hydrazine en quantité stoechiométrique sur l'acide glyoxylique commerciale (Sigma) dans l'isopropanol. Le précipité jaune-orangé est séché et filtré, et le sel du lithium est préparé dans une solution méthanol-eau (50:50) par ajout de la quantité stoechiométrique de carbonate de lithium. Le sel est séché sous vide et testé dans des conditions similaires à celles de l'exemple 7. Ce composé présente une activité rédox réversible à 1,7 V par rapport au lithium.

Exemple 16

Un polymère de type polyamide de formule :

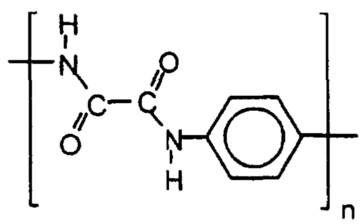

est obtenu par polycondensation de l'oxalate de méthyle avec la 1,4-phénylène diamine dans la DMF. Le polymère réduit est transformé en forme quinonimine oxydée par action de bis(trifluoroacétoxy)iodo]benzène dans le dichlorométhane. Le composé obtenu a pour formule développée:

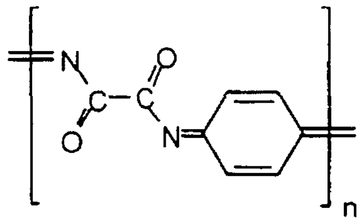

Il présente un couple rédox à 2,7 V vs. $Li^+/Li^\circ$ pour une capacité de 310 $mAh.g^{-1}$ (théorique 347). Des polymères similaires sont préparés par action du fumarate de trifluoroéthyle sur la 1,4-phénylène diamine (2,7 V vs. $Li^+/Li^\circ$ ) ou du chlorure d'oxalyle sur la 3,6 diamino pyridazine (2,9 V vs. $Li^+/Li^\circ$).

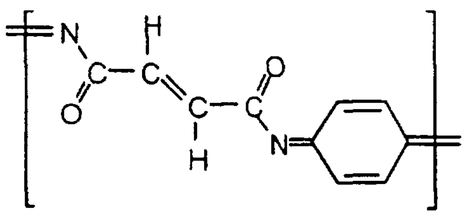

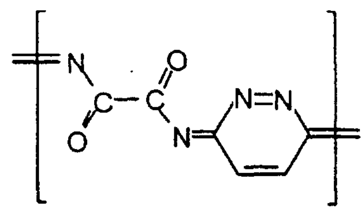

Exemple 17

Un polymère rédox est préparé par condensation du chlorure de fumaryle sur la N,N'-diméthylhexaméthylènediamine en solution dans le DMF, en présence de deux équivalents de pyridine. Le polymère est précipité par l'eau et purifié par dissolution dans l'acétone et reprécipitation dans le méthanol. Ce polymère mélangé à du noir de carbone présente une activité rédox à 1 V vs. $Li^+/Li^\circ$. pour une capacité de 195 $mAh.g^{-1}$ (théorique 247)

Exemple 18

Similairement à l'exemple 10, un polymère rédox possédant une conductivité ionique et produit par la polycondensation du l'oxalyl-diimidazole sur le 1,8-bis(méthylamino)-3,6-dioxaoctane (Janssen, Belgique) dans le DMF. Ce polymère présente aussi une activité rédox à 1 V vs. $Li^+/Li^\circ$. À l'état neutre, le polymère possède des propriétés complexantes vis-à-vis les sels et une conductivité ionique facilitant la réaction rédox. La structure de ce polymère à l'état partiellement réduit est

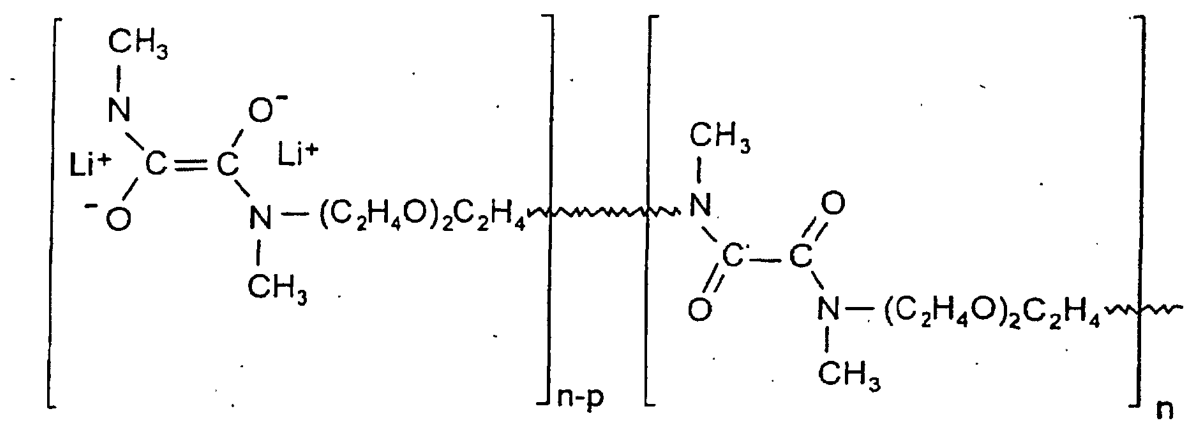

Un copolymère amorphe peut être obtenu en utilisant un mélange de l'amine précédent avec 1,5-bis(méthylamino)-3-oxapentane. De la même manière, les groupements oxalyles peuvent être substitués par des groupements fumaryles ou muconyle.

## Revendications

**1.** Electrode contenant, en totalité ou en partie, un composé rédox dont au moins un état d'oxydation est décrit par:

- un sel de l'acide rhodizonique comprenant un anion tel que

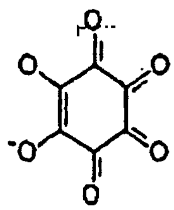 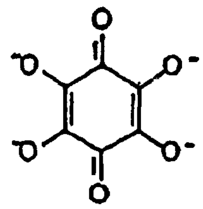 ;

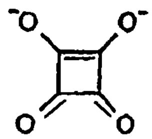 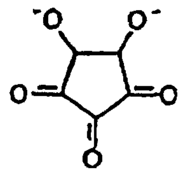

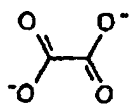 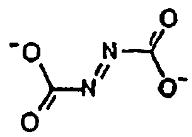 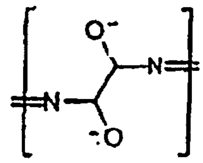 ;

- un sel de l'acide rufigallique représenté par la formule

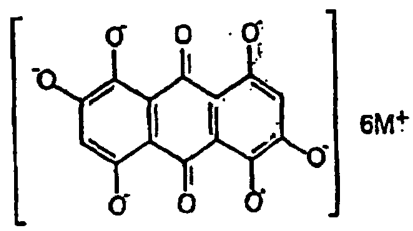

  et de ses composts d'oxydation;
- un sel de l'acide élagique représenté par la formule

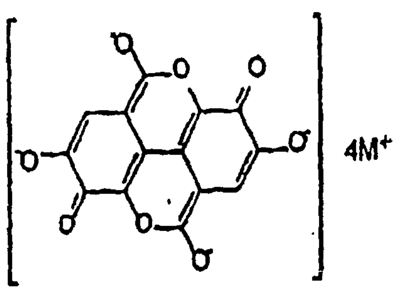

  et de ses composés d'oxydation, dans laquelle les atomes d'oxygène doublement liés peuvent être remplacés par un groupement NCN ou $C(CN)_2$;
- un polymère de l'acide thiocyanique ou du 1-cyano-2-mercapoacetylène représenté par la formule

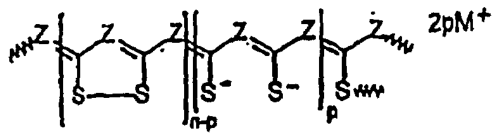

et ses produits d'oxydation et de réduction, dans laquello Z=N ou C-CN ;

- un polymère contenant les unités dérivées de la keto-pyridine représenté par la formule

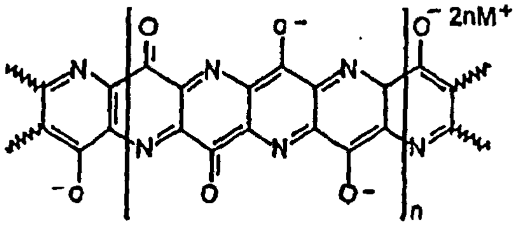

ainsi que ses produits d'oxydation et de réduction;

- un polymère alterné contenant les unités benzoquinone et pyrazine ainsi que ses produits d'oxydation et de réduction;
- un sel de l'acide 1,2-dimeroaptocyclobutènedione (dithiosquarique) et ses composés de polymérisation, représentés par les formules <

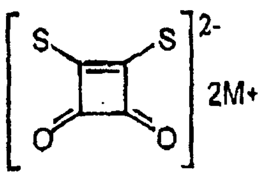

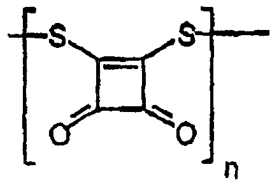

et ses produits d'oxydation ;

- un sel de l'acide 1,5-dihydropyrimido[5,4*d*]pyrimidine-2,4,6,8(3*H*,7*H*)-tétrone représenté par la formule

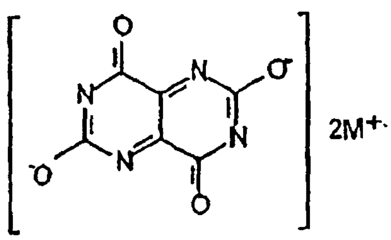

et ses composés d'oxydation ;

- un sel d'un acide dicarboxylique dont les groupements sont réliés par des segments conjugués et correspondant à la formule

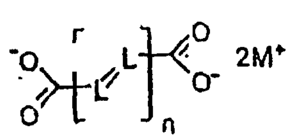

dans laquelle L est indépendamment $CR^5$, N ou C-CN, et où $R^5$ est un atome d'hydrogène, un groupement $C_{1-12}$alkyle, $C_{2-12}$alkényle, $C_{6-10}$aryle, $C_{6-10}$aryl $C_{1-12}$alkyle, $C_{1-12}$akyle $C_{6-10}$aryle substitué ou non par un ou plusieurs substituant oxa, aza ou thia de 1 à 30 atomes de carbone, deux groupements $R^5$ pouvant être réunis pour former un cycle aliphatique, aromatique ou hétérocyclique de 4 à 8 atomes de carbone lorsque les 2 L sont $CR^5$;

- un polyamide dérivé d'un acide dicarboxylique dont les groupements sont reliés par des segments conjugués, correspondant à la formule :

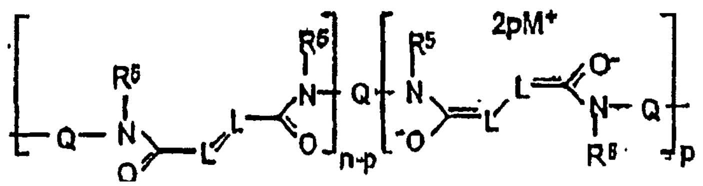

dans laquelle L et $R^5$ sont tels que défini précédemment et Q est un groupement divalent alkylène, alkénylène, aryléne, arylalkylène, alkylearylène de 1 à 30 atomes de carbone et pouvant contenir des substituants oxa, aza ou thia.

$M^+$ représente un proton, un cation métallique alcalin, un cation alcalino-terreux, un cation d'un métal de transition; un cation d'une terre rare; un cation organométallique ; un cation organique de type «onium »; une unité de répétition d'un polymère conjugué sous forme oxydée cationique; ou un cation sous forme monomère ou polymère et possédant optionnellement un caractère rédox;

**2.** Electrode selon la revendication 1 **caractérisée en ce que** le sel de l'acide rhodizonique est le rhodizonate de lithium, ou le rhodizonate de cuivre et ses produits de réduction.

**3.** Utilisation d'une électrode suivant la revendication 1 ou 2, comme électrode négative dans un générateur électrochimique lorsque les couples rédox sont compris entre 0,1 et 2 V versus $Li^+/Li^0$; ou comme électrode positive dans un générateur électrochimique lorsque les couples rédox sont compris entre 2 et 3,7 V versus $Li^+/Li^0$.

**4.** Electrode selon la revendication 1, **caractérisée en ce qu'** elle contient en plus au moins un conducteur électronique et au moins un liant.

**5.** Electrode selon la revendication 4, **caractérisée en ce que** le conducteur électronique est le noir de carbone ou la poudre de graphite, et le liant est le polytétrafluoroéthylène, les co- ou ter-polymère de l'éthylène, du propylène et d'un diène.

**6.** Utilisation d'une électrode selon la revendication 1, en tant que source de lithium, permettant de compenser les pertes inhérentes à la formation de couches de passivation par les électrodes.

**7.** Système de stockage de l'énergie électrique de type générateur primaire ou secondaire ou super-capacité comprenant un électrolyte, au moins une électrode négative et au moins une électrode positive selon la revendication 1.

**8.** Système de stockage selon la revendication 7 **caractérisé en ce que** le cation métallique alcalin est le cation de lithium.

**9.** Système de stockage selon la revendication 7 **caractérisé en ce que** l'électrode négative est le lithium métallique ou un des ses alliages, optionnellement sous forme de dispersion nanométrique dans de l'oxyde de lithium ; les nitrures doubles de lithium et d'un métal de transition ; les oxydes à bas potentiel formules générales $Li_{1+y}Ti_{2-x/4}O_4$ où x et y varient entre 0 et 1 ; le carbone et les produit carbonés issus de la pyrolyse de matières organiques.

**10.** Système de stockage selon la revendication 7 **caractérisé en ce que** l'électrode positive contient un autre composé matériau d'électrode choisi parmi les oxydes et les sulfures de métaux de transitions.

**11.** Système de stockage selon la revendication 7 **caractérisé en ce que** l'électrolyte contient un polymère de type polaire, un solvant polaire, ou leurs mélanges, et au moins un sel ionique.

**12.** Système de stockage selon la revendication 11 **caractérisé en ce que** le polymère de type polaire est un polyéther, un homo- ou copolymère à base de fluorure de vinylidène, un homo- ou copolymère à base d'acrylonitrile, ou un

homo- ou copolymère à base de méthacrylate de méthyle.

**13.** Système de stockage selon la revendication 11 **caractérisé en ce que** le solvant polaire est choisi parmi les carbonates cycliques et acycliques, la γ-butyrolactone, les monoalkylamides et dialkylamides, les tétraalkylsulfamides, les éthers dialkylés des mono-, di-, tri- et tetraéthylene glycols ainsi que les oligomères de masses inférieures à 2000 g/mole et leurs mélanges.

## Patentansprüche

**1.** Elektrode, die ganz oder zum Teil eine Redox-Verbindung aufweist, von der zumindest eine Oxidationsstufe durch folgendes beschrieben ist, nämlich:

- ein Salz der Rhodizonsäure, das ein Anion enthält, wie

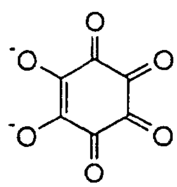

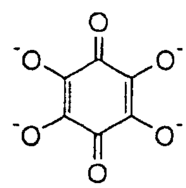

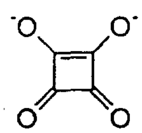

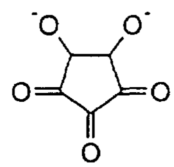

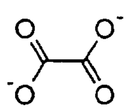

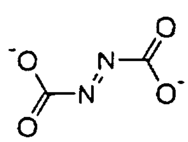

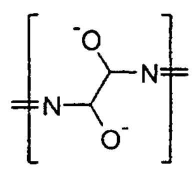

- ein Salz der Rufigallussäure, das durch die Formel dargestellt ist

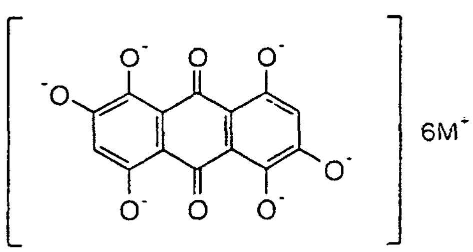

und dessen Oxidationsverbindungen;

- ein Salz der Elagsäure, das durch die folgende Formel dargestellt ist

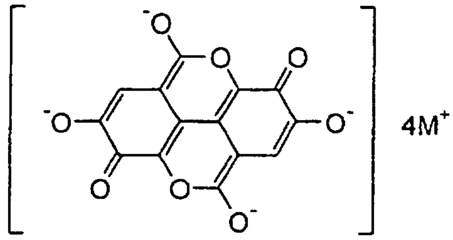

und dessen Oxidationsprodukte, in denen die doppelt gebundenen Sauerstoffatome durch eine NCN- oder C $(CN)_2$-Gruppe ersetzt sein können;

- ein Polymer der Thiocyansäure oder von 1-Cyano-2-mercaptoacetylen, das durch die folgende Formel dargestellt ist

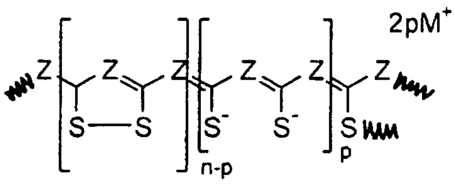

und dessen Oxidations- und Reduktionsprodukte, in denen Z = N oder C-CN ist;

- ein Polymer, das Untereinheiten enthält, die aus einem Ketopyridin entstanden sind, das durch die folgende Formel dargestellt ist

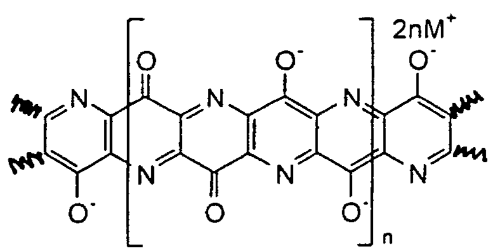

wie auch dessen Oxidations- und Reduktionsprodukte;

- ein alternierendes Polymer, das Benzochinon- und Pyrazinuntereinheiten aufweist, wie auch dessen Oxidations- und Reduktionsprodukte;
- ein Salz der Säure 1,2-Dimercaptocyclobutendion (Dithioquadratsäure) und deren Polymerisationsverbindungen, die durch folgende Formeln dargestellt sind

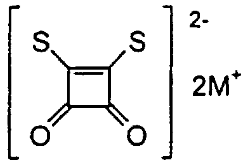

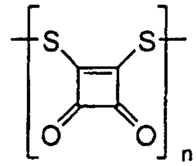

und dessen Oxidationsprodukte;

- ein Salz der Säure 1,5-Dihydropyrimido[5,4d]pyrimidin-2,4,6,8 (3H,7H)-tetraon, das durch folgende Formel dargestellt ist

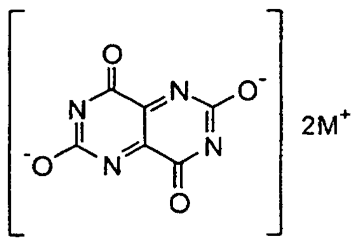

und dessen Oxidationsprodukte;

- ein Salz einer Dicarbonsäure, wobei die Gruppen durch Abschnitte miteinander verbunden sind, die konjugiert sind und die folgender Formel entsprechen

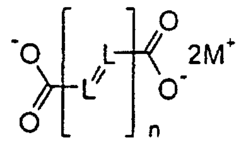

in der L jeweils unabhängig voneinander $CR^5$, N oder C-CN ist und wobei $R^5$ folgendes bedeutet, nämlich ein Wasserstoffatom, eine $C_{1-12}$-Alkylgruppe, eine $C_{2-12}$-Alkylengruppe, eine $C_{6-10}$-Arylgruppe, eine $C_{6-10}$-Aryl-$C_{1-12}$-Alkylgruppe, eine $C_{1-12}$-Alkyl-$C_{6-10}$-Arylgruppe, die substituiert sein können oder nicht, und zwar mit mehreren Oxa-, Aza- oder Thiasubstituenten mit 1-30 Kohlenstoffatomen, zwei $R^5$-Gruppen können untereinander verbunden sein, um einen aliphatischen, aromatischen oder heterozytischen Ring mit 4 bis 8 Kohlenstoffatomen zu bilden, wobei die beiden L $CR^5$ sind;

- ein Polyamid, das aus einer Dicarbonsäure entstanden ist, wobei die Gruppen durch konjugierte Abschnitte miteinander verbunden sind, die der Formel entsprechen:

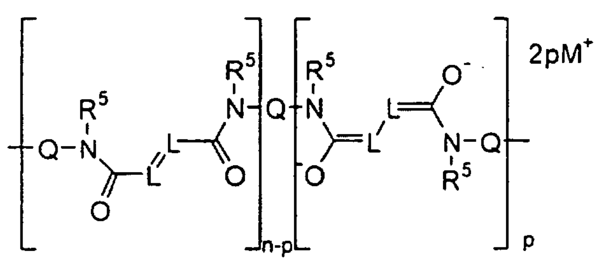

in der L und $R^5$ wie zuvor definiert sind und Q eine divalente Alkylen-, Alkenylen-, Arylen-, Arylalkylen-, Alkylarylengruppe mit 1 bis 30 Kohlenstoffatomen ist und Oxa-, Aza- oder Thiasubstituenten aufweisen kann,

wobei $M^-$ für folgendes steht, ein Proton, ein Alkalimetallkation, ein Erdalkalikation, ein Übergangsmetallkation, ein Seltenerdkation, ein Organometallkation, ein organisches Kation vom Typ "Onium", eine sich wiederholende Untereinheit eines konjugierten Polymers in seiner oxidierten kationischen Form, oder ein Kation in monomerischer oder polymerischer Form, und weist wahlweise Redoxcharakter auf.

2. Elektrode nach Anspruch 1, **dadurch gekennzeichnet, dass** das Salz der Rhodizonsäure Lithiumrhodizonat oder

Kupferrhodizonat und deren Reduktionsprodukte ist.

3. Verwendung einer Elektrode nach Anspruch 1 oder 2, als negative Elektrode in einem elektrochemischen Generator, wobei die Redoxpaare zwischen 0,1 und 2 V gegenüber $Li^+/Li^0$ liegen; oder als positive Elektrode in einer elektrochemischen Stromquelle, wobei die Redoxpaare zwischen 2 und 3,7 V gegenüber $Li^+/Li^0$ liegen.

4. Elektrode nach Anspruch 1, **dadurch gekennzeichnet, dass** sie zusätzlich zumindest einen elektronischen Leiter und zumindest ein Bindemittel aufweist.

5. Elektrode nach Anspruch 4, **dadurch gekennzeichnet, dass** der elektronische Leiter Ruß oder Graphitpulver ist und dass das Bindemittel Polytetrafluorethylen, die Co- oder Terpolymere von Ethylen, von Propylen und von einem Dien ist.

6. Verwendung einer Elektrode nach Anspruch 1, als Quelle für Lithium, die es ermöglicht, Verluste zu kompensieren, die aus der Bildung von Passivierungsschichten durch die Elektroden herrühren.

7. Speichersystem für elektrische Energie des Typs Primär- oder Sekundär- oder Überkapazitätsgenerator, das folgendes aufweist, nämlich ein Elektrolyt, zumindest eine negative Elektrode und zumindest eine positive Elektrode nach Anspruch 1.

8. Speichersystem nach Anspruch 7, **dadurch gekennzeichnet, dass** das Alkalimetallkation das Lithiumkation ist.

9. Speichersystem nach Anspruch 7, **dadurch gekennzeichnet, dass** die negative Elektrode metallisches Lithium oder eine seiner Legierungen ist, wahlweise in Form einer nanometrischen Dispersion in Lithiumoxid; binäre Nitride von Lithium und einem Übergangsmetall; Oxide mit niedrigem Potential mit der allgemeinen Formel $Li_{1+y}Ti_{2-x/4}O_4$, wobei x und y zwischen 0 und 1 variieren; Kohlenstoff und kohlenstoffhaltige Produkten, die aus der Pyrolyse von organischen Materialien entstehen.

10. Speichersystem nach Anspruch 7, **dadurch gekennzeichnet, dass** die positive Elektrode eine weitere Verbindung aus Elektrodenmaterial aufweist, die ausgewählt ist unter den Oxiden und den Sulfiden der Übergangsmetalle.

11. Speichersystem nach Anspruch 7, **dadurch gekennzeichnet, dass** der Elektrolyt folgendes aufweist, nämlich ein Polymer des polaren Typs, ein polares Lösungsmittel oder deren Mischung, und zumindest ein ionisches Salz.

12. Speichersystem nach Anspruch 11, **dadurch gekennzeichnet, dass** das Polymer des polaren Typs folgendes ist, nämlich ein Polyether, ein Homo- oder Copolymer auf Basis von Vinylidenfluorid, ein Homo- oder Copolymer auf Basis von Acrylonitril oder ein Homo- oder Copolymer auf Basis von Methylmethacrylat.

13. Speichersystem nach Anspruch 11, **dadurch gekennzeichnet, dass** das polare Lösungsmittel ausgewählt ist aus den zyklischen und azyklischen Karbonaten, γ-Butyrolacton, den Monoalkylamiden und Dialkylamiden, den Tetraalkylsulfamiden, den Dialkylethern von Mono-, Di-, Tri- und Tetraethylenglycolen wie auch den Oligomeren mit Massen kleiner als 2000 g/mol und Mischungen daraus.

## Claims

1. Electrode comprising, in all or in part, a redox compound, at least one oxidation state of which is described by:

- a salt of rhodizonic acid comprising an anion such as

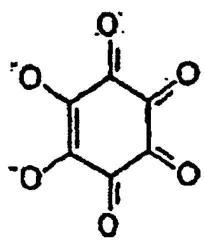 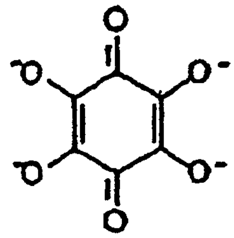

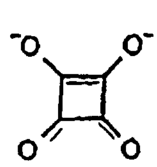 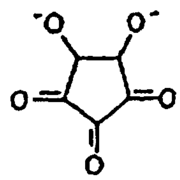

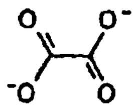 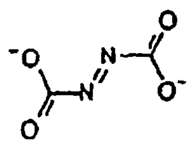 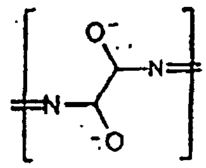 ;

- a salt of rufigallic acid represented by the formula

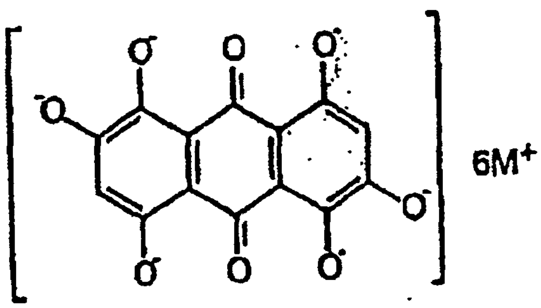

and of its oxidation compounds;

- a salt of elagic acid represented by the formula

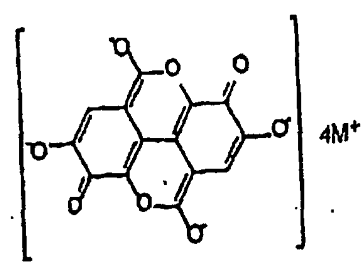

and of its oxidation compounds, in which the doubly bonded oxygen atoms can be replaced by an NCN or C $(CN)_2$ group;

- a polymer of thiocyanic acid or of 1-cyano-2-mercaptoacetylene represented by the formula

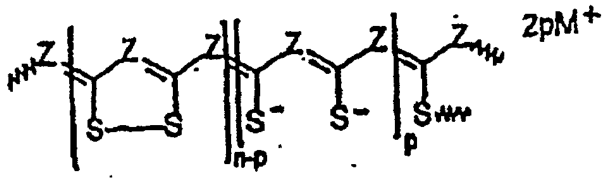

and its oxidation and reduction products, in which Z = N or C-CN;

- a polymer comprising units derived from the ketopyridine represented by the formula

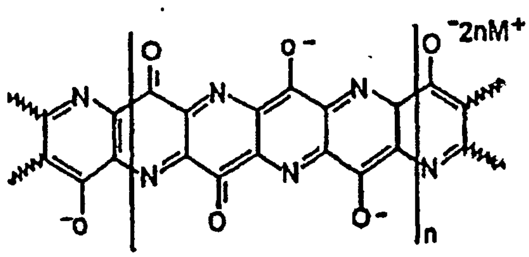

and its oxidation and reduction products;

- an alternating polymer comprising benzoquinone and pyrazine units, and its oxidation and reduction products;
- a salt of the acid 1,2-dimercaptocyclobutene-dione (dithiosquaric acid) and its polymerization compounds, represented by the formulae

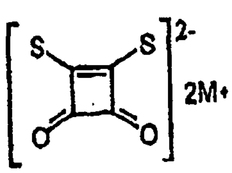

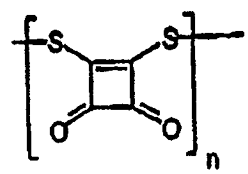

and its oxidation products;

- a salt of the acid 1,5-dihydropyrimido-[5,4-*d*]pyrimidine-2,4,6,8(3*H*,7*H*)-tetrone represented by the formula

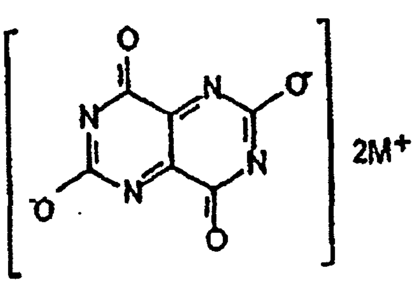

and its oxidation compounds;

- a salt of a dicarboxylic acid, the groups of which are connected via conjugated segments, corresponding to

the formula

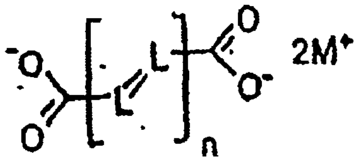

in which L is independently $CR^5$, N or C-CN, and where $R^5$ is a hydrogen atom or a $C_{1-12}$alkyl, $C_{2-12}$alkenyl, $C_{6-10}$aryl, $C_{6-10}$aryl$C_{1-12}$alkyl or $C_{1-12}$alkyl$C_{6-10}$aryl group comprising from 1 to 30 carbon atoms which is or is not substituted by one or more oxa, aza or thia substituents, it being possible for two $R^5$ groups to be combined to form an aliphatic, aromatic or heterocyclic ring comprising from 4 to 8 carbon atoms when the 2 L groups are $CR^5$;

- a polyamide derived from a dicarboxylic acid, the groups of which are connected via conjugated segments, corresponding to the formula:

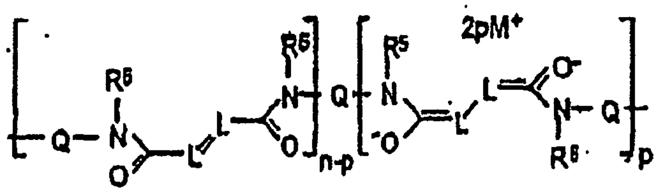

in which L and $R^5$ are as defined above and Q is a divalent alkylene, alkenylene, arylene, arylalkylene or alkylarylene group comprising from 1 to 30 carbon atoms which can comprise oxa, aza or thia substituents,

$M^+$ represents a proton, an alkali metal cation, an alkaline earth metal cation, a transition metal cation, a rare earth metal cation, an organometallic cation, an organic cation of "onium" type, a repeat unit of a conjugated polymer in the cationic oxidized form, or a cation in the form of a monomer or polymer optionally possessing a redox nature.

**2.** Electrode according to Claim 1, **characterized in that** the salt of rhodizonic acid is lithium rhodizonate or copper rhodizonate and its reduction products.

**3.** Use of an electrode according to Claim 1 or 2 as negative electrode in an electrochemical generator when the redox couples are between 0.1 and 2V versus $Li^+/Li^0$ or as positive electrode in an electrochemical generator when the redox couples are between 2 and 3.7V versus $Li^+/Li^0$.

**4.** Electrode according to Claim 1, **characterized in that** it additionally comprises at least one electronic conductor and at least one binder.

**5.** Electrode according to Claim 4, **characterized in that** the electronic conductor is carbon black or graphite powder and the binder is polytetrafluoroethylene or co- or terpolymers of ethylene, of propylene and of a diene.

**6.** Use of an electrode according to Claim 1, as lithium source, making it possible to compensate for losses inherent in the formation of passivation layers by electrodes.

**7.** System for the storage of electrical energy of primary or secondary generator or supercapacitor type comprising an electrolyte, at least one negative electrode and at least one positive electrode according to Claim 1.

**8.** Storage system according to Claim 7, **characterized in that** the alkali metal cation is the lithium cation.

**9.** Storage system according to Claim 7, **characterized in that** the negative electrode is lithium metal or one of its alloys, optionally in the form of a nanometric dispersion in lithium oxide; double nitrides of lithium and of a transition metal; low potential oxides of general formulae $Li_{1+y}Ti_{2-x/4}O_4$ where x and y vary between 0 and 1; carbon and carbonaceous products resulting from the pyrolysis of organic matter.

**10.** Storage system according to Claim 7, **characterized in that** the positive electrode comprises another compound which is an electrode material chosen from transition metal oxides and sulphides.

**11.** Storage system according to Claim 7, **characterized in that** the electrolyte comprises a polymer of polar type, a polar solvent, or their mixtures, and at least one ionic salt.

**12.** Storage system according to Claim 11, **characterized in that** the polymer of polar type is a polyether, a homo- or copolymer based on vinylidene fluoride, a homo- or copolymer based on acrylonitrile, or a homo- or copolymer based on methyl methacrylate.

**13.** Storage system according to Claim 11, **characterized in that** the polar solvent is chosen from cyclic and acyclic carbonates, γ-butyrolactone, monoalkylamides and dialkylamides, tetraalkylsulphamides, dialkyl ethers of mono-, di-, tri- and tetraethylene glycols, and oligomers with masses of less than 2 000 g/mol and their mixtures.